# EUROPEAN PATENT SPECIFICATION

(11) **EP 0 790 447 B1**
(45) Date of publication and mention of the grant of the patent: **22.05.2002**
(21) Application number: 97300849.3
(22) Date of filing: 10.02.1997
(51) Int. Cl.: F16K 1/16

(54) **Valve having three rotary vanes**
Ventil mit drei Drehschiebern
Soupape à trois tiroirs rotatifs

(30) Priority: 14.02.1996 US 601624
(43) Date of publication of application: 20.08.1997
(73) Proprietor: THE BOC GROUP, INC., Murray Hill, New Providence, New Jersey 07974-2082 (US)
(72) Inventor: Karlicek, Thomas Alan, San Ramon, California 94583 (US)
(74) Representative: Bousfield, Roger James

(56) References cited:
- EP-A- 0 036 438
- US-A- 4 076 035
- US-A- 4 366 830
- US-A- 5 168 900
- US-A- 5 370 361

## Description

This invention relates to a valve having three vanes mounted within a circular throat of a valve body for rotation between open and closed positions to throttle flow within the throat of the valve body. More particularly, the present invention relates to such a valve in which each of the vanes is configured to rotate about an axis of symmetry so that rotational movement of the vanes is balanced.

Butterfly valves are known which employ a circular disk or butterfly which is rotatable between open and closed positions to throttle flow. A problem with such valves is that they tend to accumulate contaminants within the throat of the valve because the disk, when in the open position, directs the flow against one side of the valve. The accumulation of contaminants is particularly troublesome for valve applications involving clean environments, such as in semiconductor fabrication. Shutter-like valve systems have also been produced that utilise a shutter-like arrangement of vanes to throttle flow. The advantage inherent in this type of valve system is that, when the valve is set in the open position, the open area of the valve throat is greater at central locations than at wall locations. This tends to inhibit flow from being directed against one side of the valve throat. A problem with multiple vanes, at least when the vanes are used in connection with a circular valve throat, is that the outlying vanes, against the throat of the valve, are not designed with a symmetric axis of rotation. As a result, the rotation of such elements is not balanced and the speed of response of the valve suffers.

The invention provides a valve having multiple vanes in which the vanes are designed to be symmetrical about their axis of rotation in order to increase the response speed of the valve.

In accordance with the invention defined by claim 1, there is provided a valve comprising a valve body having a circular throat and two outlying vanes mounted for rotation within the circular throat of the valve body between an open position and a closed position.

Each of the two outlying vanes has two opposed circular peripheral edges configured so that one of the two opposed circular peripheral edges fits against the circular throat when the two vanes are in their closed position.

Such a valve is known from US-A-4 076 035. The invention is distinguished from this prior art by the remaining features of claim 1.

For a better understanding of the invention, reference will now be made, by way of exemplification only, to the accompanying drawings, in which:
Figure 1 is a top plan view of a valve of the invention with portions broken away and with the valve shown in a closed position;
Figure 2 is a fragmentary end view of Figure 1 illustrating a belt tensioning mechanism of the invention; and
Figure 3 is a fragmentary, top plan view of a valve of the invention in which the vanes are shown rotated about a 60° to an open position.

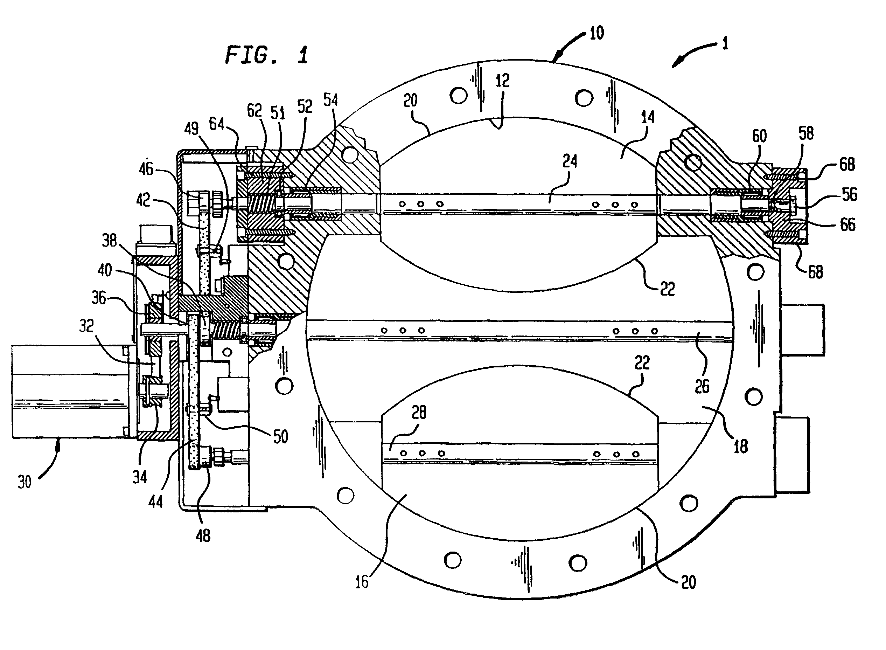

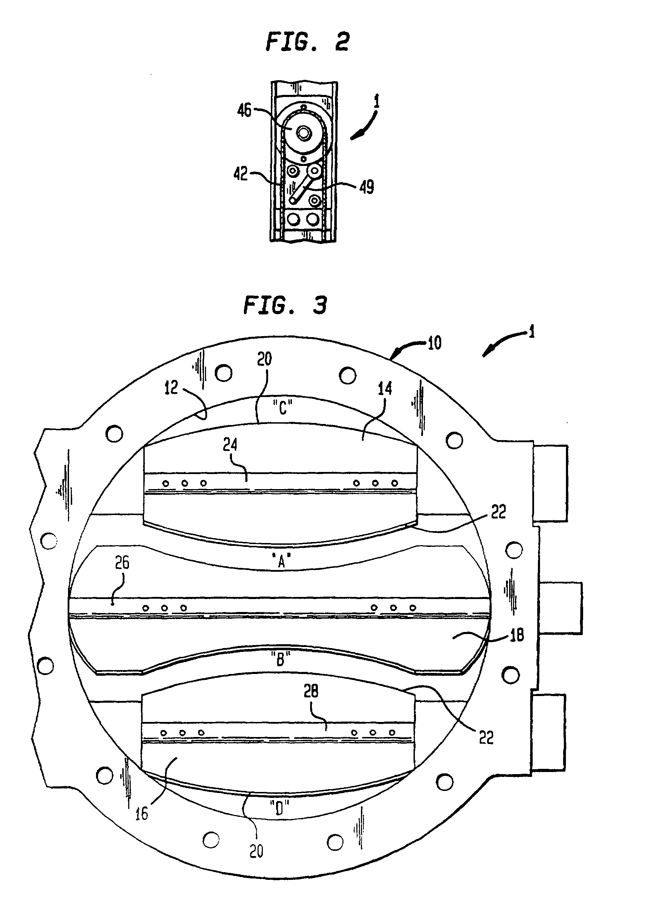

With reference to Figures 1 and 2, a valve 1 of the invention has a valve body 10, a circular throat 12, two outlying vanes 14 and 16 and a central vane 18. The three vanes 14, 16, and 18 are mounted for rotation within the circular throat 12 of the valve body 10.

Although valve body 10 as illustrated has a flange-like configuration, the invention is not limited to such embodiments but is intended to cover apparatus in which the valve body forms part of a larger apparatus and is therefore integrally formed with such apparatus. In addition, although the valve 1 has particular application to a clean environment designed to operate under vacuum conditions, the invention is not limited in this respect. The invention is equally applicable to proportional valve movements and valves having only two (open and closed) positions.

Each of the outlying vanes 14 and 16 have two opposed circular peripheral edges 20 and 22 that are configured so that the edge 20 fits against the circular throat 12 when the vanes are in the closed position. The peripherial edges 20 and 22 are spaced apart from one another as opposed to touching one another (another possible embodiment) at the ends of each of the outlying vanes 14 and 16. The central vane has an hour glass-like periphery and is configured so that the circular peripheral edges 22 of the vanes 14 and 16 nest within the hour glass-like periphery of the central vane 18 when the vanes 14, 16 and 18 are in the closed position.

The central vane 18 could have a rectangular-like configuration and, as such, have two straight, lengthwise extending edges overlapping the outlying vanes 14 and 16 in the closed position. However, such an overlap would not be desirable in contaminant-free environments because contaminants would tend to collect within the overlap.

With additional reference to Figure 3, the vanes 14, 16, and 18 are proportioned and can rotate at the same angular rotation such that the two central open areas "A" and "B" (located between the outlying vanes 14 and 16 and the central vane 18) are greater than the two outlying areas "C" and "D" (located between the wall of the valve body 10 and the outlying vanes 14 and 16) for a given angular rotation of the vanes. As a result, the flow through the valve 1 is greater in central regions of the valve than outlying areas to balance the flow through the valve 1, thereby to help prevent the entire flow from being directed against the wall of the valve body 10. As mentioned above, flow against the walls of the valve body 10 (or for that matter apparatus in which the valve body 10 is mounted) produce an undesirable retention of contaminants within the valve.

The vanes 14, 16 and 18 are mounted on shafts 24, 26 and 28, respectively. Each of the vanes has a symmetrical axis of rotation (or in other words is configured to be divided by a longitudinal plane along such symmetrical axis into two similar halves). Since the vanes 14, 16, and 18 are mounted so that the shafts 24, 26, and 28 coincide with such axis, rotation of the shafts 24, 26, and 28 will produce a balanced rotation of the vanes 14, 16, and 18. This balanced rotation allows the vanes 14, 16, and 18 to be rotated at a higher angular speed of rotation than vanes not having such a symmetrical axis of rotation.

The shafts 24, 26, and 28 are rotated by a stepper motor 30 acting on the shaft 26 by way of a drive belt 32 engaging a drive pulley 34 connected to the motor 30 and a driven pulley 36 attached to the shaft 26. The rotation of the shaft 26 is transmitted to driven belts 42 and 44 through inner pulleys 38 and 40 attached to the shaft 26. The driven belts 42 and 44 in turn engage outer driven pulleys 46 and 48 which are attached to the shafts 24 and 28, respectively. Belt tension is maintained by belt tensioning mechanisms 49 and 50. Thus, the shafts 24, 26 and 28 and the vanes 14, 16, and 18 rotate in the same direction under impetus of the motor 30. Alternatively, each of the vanes 14, 16, and 18 could be separately driven so that for a given open position for the valve 1, the vanes 14 and 16 would have a greater or lesser angular rotation than the central vane 18.

Each of the shafts is preferably mounted for rotation within the valve body 10 by a known mechanism that is illustrated for the shaft 24. This mechanism includes a spring 51 which bears against an annular thrust bearing 52 which in turn bears against a needle bearing 54 to urge the shaft 24 away from the spring or the right in the drawings. The shaft 24 is, however, held in position by a set screw 56 which bears against an annular thrust bearing 58 which in turn bears against the end of the shaft 24. A needle bearing 60 rotatably attaches the shaft 24 to the valve body 10 at the end of the shaft 24 opposite to engagement of the spring 50. The spring 50 is compressed by a bearing housing 62 which is connected to the valve body 10 by studs 64. The set screw 56 is threaded within an opposed bearing housing 66 which is attached to the valve body 10 by studs 68.

The advantage of the foregoing mechanism is that rotation of the set screw 56 in opposition to the spring 50 will properly align the shaft 24 and thus the vane 14 within the throat 12 of the valve body 10.

## Claims

1. A valve comprising:
a valve body (10) having a circular throat (12); and
three vanes (14, 16, 18) mounted for rotation within the circular throat (12) of the valve body (12) between an open position and a closed position
the three vanes (14, 16, 18) comprising two outlying vanes (14, 16), each having two opposed circular peripheral edges (20, 22) configured so that one (20) of the two opposed circular peripheral edges fits against the circular throat (12) when the two vanes (14, 16) are in their closed position, and a central vane (18) located between the outlying vanes (14, 16);
each of the three vanes (14, 16, 18) configured to have a symmetrical axis (24, 28, 26) of rotation and being mounted within the circular throat (12) of the valve body (10) so as to rotate about the symmetrical axis of rotation.

2. A valve according to Claim 1 in which the opposed circular peripheral edges (20, 22) are spaced apart from one another.

3. A valve according to Claim 1 or Claim 2 in which the central vane (18) has an hour glass-like peripheral edge.

4. A valve according to any preceding claim in which:
the three vanes (14, 16, 18) are mounted so that each of the three vanes rotate in the same direction and at the same angular rate; and
the three vanes are proportioned so that two central open areas, defined between the central vane (18) increases at a greater rate than two outlying areas, defined between the outlying vanes and the valve body (10), as the three vanes are rotated from their closed to open positions.

5. A valve according to Claim 3 or Claim 4 in which the hour glass-like peripheral edge of the central vane (18) is configured such that the other of the circular edges (22) of the two outlying vanes nest within the hour glass-like periphery of the central vane when the three vanes (14, 16, 18) are in their closed position.

## Patentansprüche

1. Ventil mit:
einem Ventilkörper (10) mit einer kreisförmigen Öffnung (12), und
drei innerhalb der kreisförmigen Öffnung (12) des Ventilkörpers (10) zwischen einer Offenstellung und einer Schließstellung drehbar montierten Flügeln (14, 16, 18),
wobei die drei Flügel (14, 16, 18) zwei außenliegende Flügel (14, 16) umfassen, die jeweils zwei gegenüberliegende kreisrunde periphere und so konfigurierte Ränder (20, 22) haben, dass einer (20) der beiden gegenüberliegenden kreisrunden peripheren Ränder an der kreisförmigen Öffnung (12) anliegt, wenn die beiden Flügel (14, 16) sich in ihrer Schließstellung befinden, und einen mittigen Flügel (18) umfassen, der zwischen den beiden äußeren Flügeln (14, 16) gelegen ist,
wobei jeder der drei Flügel (14, 16, 18) so konfiguriert ist, dass er eine symmetrische Drehachse (24, 28, 26) hat und innerhalb der kreisförmigen Öffnung (12) des Ventilkörpers (10) so montiert ist, dass er um die symmetrische Drehachse drehbar ist.

2. Ventil nach Anspruch 1, wobei die gegenüberliegenden kreisrunden peripheren Ränder (20, 22) voneinander beabstandet sind.

3. Ventil nach Anspruch 1 oder 2, wobei der mittige Flügel einen stundenglasförmigen peripheren Rand hat.

4. Ventil nach einen der vorhergehenden Ansprüche, wobei
die drei Flügel (14, 16, 18) so montiert sind, dass jeder der drei Flügel in der gleichen Richtung und mit der gleichen Winkelgeschwindigkeit dreht, und
die drei Flügel so proportioniert sind, dass zwei zentrale offene Bereiche, die zwischen den mittigen Flügel (18) gebildet sind, mit einer größeren Rate als zwei außenliegende Bereiche größer werden, die zwischen den außenliegenden Flügeln und dem Ventilkörper (10) gebildet sind, wenn die drei Flügel aus ihrer Schließstellung in die Offenstellung gedreht werden.

5. Ventil nach Anspruch 3 oder 4, wobei der stundenglasförmige periphere Rand des mittleren Flügels (18) so konfiguriert ist, dass die andere der kreisrunden Ränder (22) der beiden außenliegenden Flügel mit dem stundenglasförmigen Peripherierand des mittleren Flügels zusammenwirken, wenn die drei Flügel (14,16,18) sich in ihrer Schließstellung befinden.

## Revendications

1. Vanne comprenant :
un corps (10) de vanne ayant une gorge circulaire (12) ; et
trois palettes (14, 16, 18) montées pour rotation dans la gorge circulaire (12) du corps (10) de la vanne entre une position ouverte et une position fermée
les trois palettes (14, 16, 18) comprenant deux palettes(14, 16) en périphérie, ayant chacune deux bords périphériques circulaires opposés (20, 22) configurés de telle sorte que l'un (20) des deux bords périphériques circulaires opposés s'adapte contre la gorge circulaire (12) lorsque les deux palettes (14, 16) sont dans leur position fermée, et une palette centrale (18) située entre les palettes (14, 16) en périphérie ;
chacune des trois palettes (14, 16, 18) étant configurée de manière à avoir un axe de rotation symétrique (24, 28, 26) et étant montée dans la gorge circulaire (12) du corps (10) de vanne de manière à tourner autour de l'axe de rotation symétrique.

2. Vanne selon la Revendication 1, dans laquelle les bords périphériques circulaires opposés (20, 22) ont une certaine distance entre eux.

3. Vanne selon la Revendication 1 ou la Revendication 2, dans laquelle la palette centrale (18) a un bord périphérique en forme de sablier.

4. Vanne selon l'une quelconque des Revendications précédentes, dans laquelle :
les trois palettes (14, 16, 18) sont montées de telle sorte que chacune des trois palettes tourne dans le même sens et selon la même vitesse angulaire ; et
les trois palettes sont proportionnées de telle sorte que deux zones centrales ouvertes, définies entre les palettes (14, 16) en périphérie et la palette centrale (18), augmentent à une plus grande vitesse que deux zones de périphérie, définies entre les palettes de périphérie et le corps (10) de vanne, lorsque les trois palettes tournent de leur position fermée à leur position ouverte.

5. Vanne selon la Revendication 3 ou la Revendication 4, dans laquelle le bord périphérique en forme de sablier de la palette centrale (18) est configuré de telle sorte que l'autre des bords circulaires (22) des deux palettes de périphérie se niche dans la périphérie en forme de sablier de la palette centrale lorsque les trois palettes (14, 16, 18) sont dans leur position fermée.
